# FASCICULE DE BREVET EUROPEEN

(11) **EP 3 357 204 B1**
(45) Date de publication et mention de la délivrance du brevet: **19.08.2020**
(21) Numéro de dépôt: 16785244.1
(22) Date de dépôt: 29.09.2016
(51) Int. Cl.: H04L 29/06, H04L 12/46, H04W 80/06

(54) **PROCÉDÉ DE CONTRÔLE DE MESSAGES DE RECOMMANDATION DANS UN RÉSEAU DE COMMUNICATION**
VERFAHREN ZUR STEUERUNG VON EMPFEHLUNGSNACHRICHTEN IN EINEM KOMMUNIKATIONSNETZWERK
METHOD FOR CONTROLLING RECOMMENDATION MESSAGES IN A COMMUNICATIONS NETWORK

(30) Priorité: 30.09.2015 FR 1559317
(43) Date de publication de la demande: 08.08.2018
(73) Titulaire: ORANGE, 75015 Paris (FR)
(72) Inventeur: BRAUD, Arnaud, 22300 Lannion (FR); FROMENTOUX, Gaël, 22560 Pleumeur Bodou (FR); FIEAU, Frédéric, 75013 Paris (FR)
(86) Numéro de dépôt international: PCT/FR2016/052472
(87) Numéro de publication internationale: WO 2017/055749

(56) Documents cités:
- TRAMMELL B ET AL: "Requirements for the design of a Substrate Protocol for User Datagrams (SPUD); draft-trammell-spud-req-00.txt", REQUIREMENTS FOR THE DESIGN OF A SUBSTRATE PROTOCOL FOR USER DATAGRAMS (SPUD); DRAFT-TRAMMELL-SPUD-REQ-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 6 juillet 2015 (2015-07-06), pages 1-14, XP015107513,
- TRAMMELL B ET AL: "Architectural Considerations for Transport Evolution with Explicit Path Cooperation; draft-trammell-stackevo-explicit-coop-00.t xt", ARCHITECTURAL CONSIDERATIONS FOR TRANSPORT EVOLUTION WITH EXPLICIT PATH COOPERATION; DRAFT-TRAMMELL-STACKEVO-EXPLICIT-COOP-00.T XT, INTERNET ENGINEERING TASK FORCE, IETF; STANDARDWORKINGDRAFT, INTERNET SOCIETY (ISOC) 4, RUE DES FALAISES CH- 1205 GENEV, 24 septembre 2015 (2015-09-24), pages 1-12, XP015108533,
- HILDEBRAND CISCO SYSTEMS B TRAMMELL ETH ZURICH J: "Substrate Protocol for User Datagrams (SPUD) Prototype; draft-hildebrand-spud-prototype-03.txt", SUBSTRATE PROTOCOL FOR USER DATAGRAMS (SPUD) PROTOTYPE; DRAFT-HILDEBRAND-SPUD-PROTOTYPE-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 9 mars 2015 (2015-03-09), pages 1-14, XP015105426, cité dans la demande

## Description

L'invention se situe dans le domaine des réseaux de télécommunications, et concerne plus particulièrement un procédé de contrôle de messages de recommandation dans un réseau de communications.

Un nouveau protocole SPUD (pour « Substrate Protocol for User Datagrams ») ayant pour but de permettre, dans un réseau de communication, une diffusion de messages de recommandation entre des points de terminaison et des entités du réseau soutenant cette communication, est actuellement en cours de définition auprès de l'organisme de normalisation IETF (pour « Internet Engineering Task Force »). Le document de l'IETF « draft-trammell-spud-req-00.txt » définit un ensemble de services que le protocole SPUD doit fournir aux réseaux de transport, aux points de terminaison et aux équipements intermédiaire. Le document « draft-trammell-stackevo-explicit-coop-OO.txt» décrit des options d'architecture pour mettre en œuvre une collaboration de points de terminaison avec des équipements intermédiaires tout en garantissant la sécurité des communications. Le document de l'IETF « draft-hildebrand-spud-prototype-03 » daté du 9 mars 2015 et intitulé « Substrate Protocol for User Datagrams (SPUD) Prototype » présente notamment un prototype de protocole SPUD. Selon ce document le protocole SPUD permet une communication entre deux points de terminaison (« endpoints » en anglais) d'un réseau par l'intermédiaire d'un « tube ». Dans la terminologie de ce document un tube est plus particulièrement défini comme un regroupement de paquets entre deux points de terminaison du réseau. Un tel tube est créé par le point de terminaison qui initie une communication à destination du deuxième point de terminaison, et peut être fermé par l'un ou l'autre des points de terminaison. Le prototype de protocole SPUD prévoit deux types de messages de recommandation sous la forme de paquets de données dits « paquets transportant des données de recommandations relatives à l'application » (« Application Data packets ») et de paquets de données dits « paquets transportant des données de recommandations relatives au chemin réseau » (« Advisory Path Data packets »). Les paquets transportant des données d'application sont émis par des points de terminaison. Chaque entité du réseau participant au tube créé pour la communication relaie ces paquets de données jusqu'à l'entité destinataire des paquets. Les paquets transportant des données de recommandations relatives au chemin réseau sont quant à eux émis par une entité de contrôle localisée sur un chemin réseau du tube entre les deux points de terminaison.

Le prototype de protocole SPUD proposé dans le document de l'IETF souffre de certains inconvénients. En effet, selon ce protocole, on transmet aux points de terminaison des informations non certifiées issues d'un sous-réseau participant à l'établissement du tube de même ces informations non certifiées sont prises en compte dans les messages de recommandation. Des messages de recommandation inappropriés sont en effet susceptibles d'être émis et échangés. De tels messages sont en outre susceptibles de provoquer une dégradation des conditions réseau en émettant des recommandations inappropriées (e.g. congestion du réseau, panne d'un équipement réseau).

Un des buts de l'invention est de remédier à des insuffisances/inconvénients de l'état de la technique et/ou d'y apporter des améliorations.

Selon un premier aspect, l'invention concerne un procédé de contrôle, selon la revendication indépendante 1, dans un réseau de communications, de messages de recommandation échangés lors d'une session entre un premier point de terminaison, dit entité source, et un deuxième point de terminaison, dit entité réceptrice, les messages étant échangés via un tube, regroupant des paquets de données entre deux points de terminaison du réseau, lesdits paquets de données étant d'un protocole de communication sans garantie de livraison des paquets de données, comprenant :
- obtention de recommandations contenues dans les messages de recommandation par une entité de contrôle localisée sur un chemin réseau du tube, l'entité de contrôle étant agréée par un opérateur du réseau de communications ;
- calcul d'un nouveau message de recommandation, à partir des recommandations obtenues et d'au moins une information relative à des conditions du réseau fournie par l'entité de contrôle ; et
- envoi du nouveau message de recommandation à destination d'au moins une entité réseau localisée à une extrémité dudit tube.

Grâce au procédé selon l'invention, il devient possible pour l'opérateur du réseau de communication d'intervenir dans une session entre deux points de terminaison (e.g. terminal utilisateur) entre lesquels un tube a été établi afin de regrouper des paquets de données d'un protocole de communication sans garantie de livraison de ces derniers (e.g. protocole UDP pour « User Datagram Protocol »). Un tel tube est par exemple un tube tel que défini dans le prototype de protocole SPUD décrit précédemment. L'intervention de l'opérateur du réseau de communications présente en particulier l'avantage de permettre une prise en compte des informations relatives aux conditions du réseau pour le calcul de messages de recommandation destinés aux entités réseaux du tube. De telles recommandations permettent d'informer les points de terminaison de l'état du réseau mettant en œuvre la communication et donc d'améliorer les actions correctives de ces derniers en cas de situation dégradée du réseau.

En cas de congestion du réseau il est notamment possible, pour par exemple un fournisseur de services échangeant avec un terminal utilisateur, d'obtenir un message de recommandation corrélé avec la situation réseau en cours, afin que le fournisseur de services puisse en tenir compte et choisir un chemin réseau plus approprié. Dans l'état de l'art actuel, les messages de recommandation n'étant pas corrélés avec des informations de l'opérateur sur les conditions du réseau, des messages de recommandation erronés conduisant à une aggravation de la situation réseau sont susceptibles d'être envoyés (e.g. message de recommandation invitant à changer un niveau d'encodage après détection d'un temps de mise en mémoire tampon anormalement long).

Selon une caractéristique particulière, le procédé comprend une interception d'au moins un message de recommandation parmi les messages de recommandation échangés, le nouveau message de recommandation calculé remplaçant le au moins un message de recommandation intercepté.

Le procédé permet avantageusement de filtrer les messages de recommandation interceptés afin de contrôler et limiter les informations échangées dans le réseau. Le filtrage permet de limiter le nombre de messages de recommandation transmis sur le réseau, mais également de contrôler le contenu des informations transmises vers un tiers ainsi que les modifications opérées sur les messages de recommandation par des entités intermédiaires. Les messages échangés entre deux points de terminaison sont en effet susceptibles de transiter par des équipements réseaux dont la crédibilité est incertaine. Selon le procédé les messages de recommandation sont interceptés par une entité de contrôle agréée par un opérateur de réseaux, ce qui permet de s'assurer de l'authenticité des messages de recommandation échangés. Un message de recommandation provenant d'une source non authentifiée, ou plus généralement d'une source non réputée de confiance, peut ainsi avantageusement ne pas être relayé par l'entité de contrôle. De même un tel message ne sera pas pris en compte dans le calcul d'un nouveau message de recommandation.

Selon une caractéristique particulière, le procédé comprend en outre une agrégation des recommandations obtenues, le calcul du nouveau message de recommandation prenant en compte les recommandations agrégées.

Les informations véhiculées par plusieurs messages de recommandations peuvent avantageusement être synthétisées dans un unique message de recommandation. Il est ainsi possible de générer un message de recommandation mettant en commun les recommandations obtenues depuis un ensemble de message de recommandation provenant de différentes sources. La pertinence du message de recommandation calculé, reposant sur des informations tant relatives au réseau opérateur permettant la mise en œuvre de la communication entre points de terminaison, que relatives à des données applicatives échangées entre points de terminaison, est en particulier augmentée.

En outre un message de recommandation agrégé permet, en nécessitant un nombre moindre de paquets de données ou des paquets de données de taille réduite, de transmettre un même nombre d'informations que celles qui auraient été transmises par l'ensemble des messages de recommandations ayant donné lieu au message agrégé.

L'agrégation des recommandations obtenues permet également de réduire le nombre de messages transmis, et donc de réduire la charge du réseau. Il en résulte une amélioration de l'utilisation de la bande passante, de la qualité de l'expérience utilisateur, et plus généralement de la qualité de service offerte.

Selon un deuxième aspect, l'invention concerne une entité de contrôle, selon la revendication indépendante 4, dans un réseau de communications, de messages de recommandation échangés via un tube, regroupant des paquets de données entre deux points de terminaison du réseau, lesdits paquets de données étant d'un protocole de communication sans garantie de livraison des paquets de données, entre un premier point de terminaison, dit entité source, et un deuxième point de terminaison, dit entité réceptrice, l'entité de contrôle étant localisée sur un chemin réseau du tube et agréée par un opérateur du réseau, comprenant :
- un premier module d'obtention, agencé pour obtenir des recommandations contenues dans les messages de recommandation ;
- un deuxième module d'obtention, agencé pour obtenir au moins une information relative à des conditions du réseau ;
- un module de calcul, agencé pour calculer un nouveau message de recommandation, à partir des recommandations obtenues par le premier module d'obtention, et d'au moins une information relative à des conditions du réseau obtenue par le deuxième module d'obtention ; et
- un module d'envoi, agencé pour envoyer le nouveau message de recommandation à destination d'au moins une entité réseau localisée sur un chemin réseau du tube.

Selon une caractéristique particulière, l'entité de contrôle comprend en outre un module d'interception, agencé pour intercepter au moins un message de recommandation parmi les messages de recommandation échangés, le module de calcul étant agencé pour remplacer le au moins un message de recommandation intercepté par le nouveau message de recommandation.

Selon une caractéristique particulière, l'entité de contrôle comprend en outre un module d'agrégation, agencé pour agréger les recommandations obtenues par le premier module d'obtention, le module de calcul étant agencé pour calculer le nouveau message de recommandation en prenant en compte les recommandations agrégées par le module d'agrégation.

Selon une caractéristique particulière, l'entité de contrôle comprend en outre un module de chiffrement, agencé pour chiffrer le nouveau message de recommandation préalablement à son envoi par le module d'envoi.

Les avantages énoncés pour l'une quelconque des caractéristiques du procédé de contrôle selon le premier aspect sont directement transposables à l'entité de contrôle selon le deuxième aspect.

Selon un troisième aspect, l'invention concerne un système de contrôle, selon la revendication indépendante 8, dans un réseau de communications, de messages de recommandation échangés via un tube, regroupant des paquets de données entre deux points de terminaison du réseau, lesdits paquets de données étant d'un protocole de communication sans garantie de livraison des paquets de données, entre un premier point de terminaison, dit entité source, et un deuxième point de terminaison, dit entité réceptrice, comprenant :
- lesdites entités source et réceptrice ;
- au moins une entité de contrôle de messages de recommandation selon le deuxième aspect.

Selon une caractéristique particulière, l'entité source est un terminal utilisateur, l'entité réceptrice un serveur, et l'entité de contrôle est en outre gérée par un opérateur du réseau de communications.

Les avantages énoncés pour l'une quelconque des caractéristiques du procédé de contrôle selon le premier aspect sont directement transposables au système selon le troisième aspect.

Selon un quatrième aspect, l'invention concerne également un programme pour une entité de contrôle, comprenant des instructions de code de programme destinées à commander l'exécution des étapes du procédé précédemment décrit, lorsque ledit programme est exécuté par ladite entité de contrôle, selon la revendication indépendante , et un support d'enregistrement, selon la revendication indépendante 11, lisible par une entité de contrôle sur laquelle est enregistré un programme pour une entité de contrôle.

L'invention sera mieux comprise à l'aide de la description suivante de modes de réalisation particuliers, en référence aux dessins annexés sur lesquels :
- la figure 1 représente un système de contrôle de messages de recommandation selon un mode particulier de réalisation ;
- la figure 2 représente un schéma synoptique des étapes du procédé de contrôle mis en œuvre par une entité de contrôle selon un mode particulier de réalisation ;
- la figure 3 représente une entité de contrôle agencé pour contrôler des messages de recommandation selon un mode particulier de réalisation.

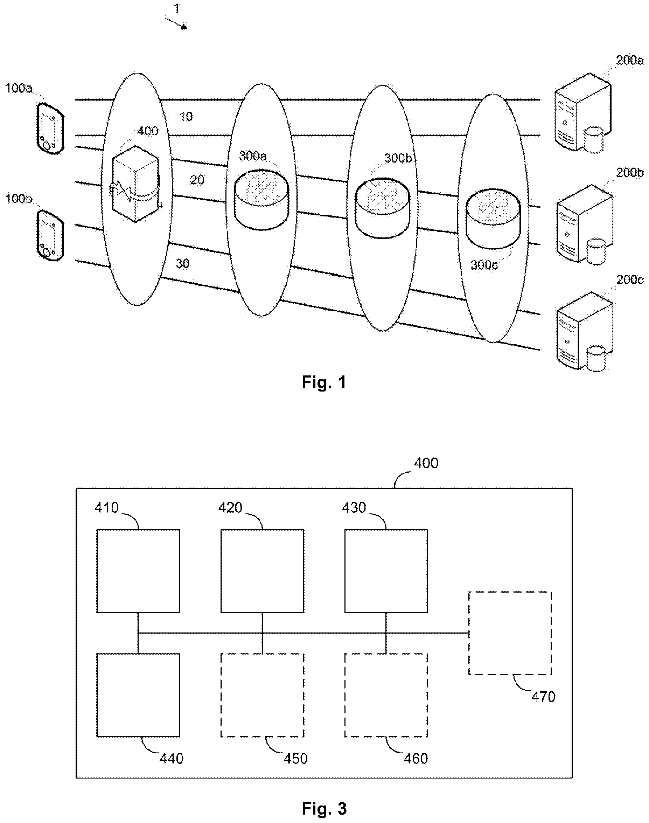

La **figure 1** représente un système, dans un réseau de communications 1, de contrôle de messages de recommandation selon un mode particulier de réalisation. Le système comprend une entité de contrôle 400, ainsi que des points de terminaison 100a-b, 200a-c.

Les points de terminaison 100a et 100b sont par exemple des terminaux utilisateurs (e.g. téléphones mobiles, tablettes, ordinateurs), et les points de terminaison 200a-c des serveurs de contenus d'un fournisseur de services. L'entité de contrôle 400 est à titre d'exemple une passerelle résidentielle permettant à un utilisateur des terminaux utilisateurs 100a-b d'accéder au réseau de communications 1. Toujours à titre d'exemple, on supposera par la suite que les points de terminaison 100a et 100b sont des tablettes de définition d'écran respective 4K UHD pour « Ultra High Définition » (soit 3840 x 2160 points) et 1080p (soit 1920 x 1080 points).

Le terminal utilisateur 100a communique avec les serveurs de contenus 200a et 200b par l'intermédiaire respectivement d'un tube 10 et d'un tube 20 tels que définis dans le document l'IETF « draft-hildebrand-spud-prototype-03 » mentionné précédemment. De même, le terminal utilisateur 100b communique avec le serveur de contenu 200c par l'intermédiaire d'un tube 30. Conformément au document de l'IETF, les paquets de données échangés entre les points de terminaison par l'intermédiaire des tubes qui leur sont associés sont sans garantie de livraison. A titre d'exemple, il s'agit de paquets de données du protocole UDP pour « User Datagram Protocol ». Les trois tubes 10, 20 et 30 correspondent plus précisément chacun à une session, dite « session SPUD », entre respectivement le terminal utilisateur 100a et le serveur de contenus 200a, le terminal utilisateur 100a et le serveur de contenus 200b, et entre le terminal utilisateur 100b et le serveur de contenus 200c. Chacune des sessions SPUD est elle-même associée à une session de service entre ces mêmes entités. A titre d'exemple, on suppose qu'une session WebRTC S1 pour « Web Real-Time Communication » est en cours entre le point de terminaison 100a et le point de terminaison 200a. Le tube 10 est associé à la session S1. De même on suppose que deux sessions S2 et S3 de lecture vidéo en continue sont en cours entre respectivement les points de terminaison 100a et 200b d'une part, et entre les points de terminaison 100b et 200c d'autre part. Les tubes 20 et 30 sont respectivement associés aux sessions S2 et S3.

Les terminaux utilisateurs 100a-b sont par ailleurs des entités dites « entités sources », du fait qu'elles initient les sessions SPUD. De la même manière, les serveurs de contenus 200a-c sont des entités dites « entités réceptrices », du fait qu'elles reçoivent des demandes d'établissement de session SPUD depuis les points de terminaison 100a-b. Les sessions SPUD étant établies, les terminaux utilisateurs 100a-b et les serveurs de contenus 200a-c sont en outre indifféremment émetteur ou récepteur des messages transitant par l'intermédiaire des tubes 10, 20 et 30. Les messages transitant par l'intermédiaire des tubes 10, 20 et 30 comprennent plus particulièrement des messages de recommandation émis par un point de terminaison à destination d'un autre point de terminaison.

L'entité de contrôle 400 est une entité agréée par un opérateur du réseau de communications 1. Elle est localisée sur respectivement un chemin réseau associé au tube 10, un chemin réseau associé au tube 20, et un chemin réseau associé au tube 30. Dans le contexte de l'invention, un chemin réseau est plus particulièrement défini par une suite d'entités réseaux par lesquelles transitent les communications associées à un tube entre deux points de terminaison. Les entités réseaux constituant un chemin réseau sont indifféremment agrées ou non par l'opérateur du réseau de communication 1. Une entité d'un chemin réseau qui est agréée par l'opérateur de réseaux est dite « de confiance ». Une ou plusieurs entités de confiance forment en outre un « domaine de confiance ». Un tube recouvre ainsi un ou plusieurs domaines selon qu'un chemin réseau qui lui est associé passe par une ou plusieurs entités réseaux agréés par l'opérateur du réseau de communications 1. Dans le présent mode de réalisation, à titre d'exemple, les entités réseaux 300a et 300c sont agréées par l'opérateur de réseaux tandis que l'entité 300b ne l'est pas et n'est de ce fait ni considérée comme une entité de confiance, ni comme appartenant à un domaine de confiance. Toujours à titre d'exemple les entités 300a et 300b sont des routeurs, et l'entité 300c est un pare-feu. Le tube 20 recouvre ainsi un domaine de confiance et un domaine non agréé par l'opérateur de réseaux. Il est en outre noté que pour un tube donné entre deux points de terminaison il peut exister plusieurs chemins réseaux associés distincts.

Dans un autre mode de réalisation, l'entité de contrôle 400 peut être toute entité de confiance agréée par un opérateur du réseau de communications 1 (e.g. DSLAM pour « Digital Subscriber Line Access Multiplexer », routeur).

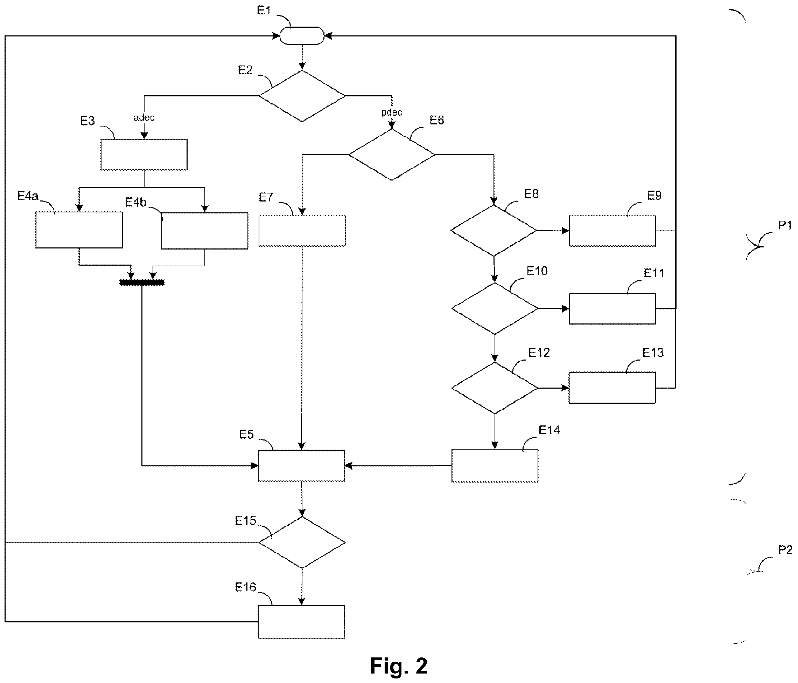

La **figure 2** représente un schéma synoptique des étapes du procédé de contrôle mis en œuvre par une entité de contrôle 400 selon un mode particulier de réalisation.

A titre illustratif, on se place par la suite dans la configuration précédemment décrite en relation avec la figure 1. On suppose notamment que l'entité de contrôle 400 est agréée par un opérateur de réseaux de communications 1 et est respectivement localisée sur un chemin réseau des tubes 10, 20 et 30. Le procédé comprend plus particulièrement deux phases P1 et P2. La phase P1 est une phase d'obtention de recommandations contenues dans lesdits messages de recommandation. La phase P2 correspond au calcul de nouvelles recommandations à partir notamment des recommandations obtenues lors de la phase P1.

La phase P1 est constituée des étapes E1 à E14 et va maintenant être décrite.

Lors de l'étape E1, l'entité de contrôle 400 est en attente d'un message de recommandation. Un message de recommandation a à titre d'exemple le format suivant :

### (SessionId ; SrcId ; DestId ; Token ; BroadcastFlag ; (Reco))

*SessionId* est un identifiant de session, *SrcId* un identifiant de l'entité source du message, *DestId* un identifiant de l'entité destinataire du message, *Token* un paramètre indiquant si le message a été émis par une entité d'un domaine de confiance, et *Reco* un ensemble de paramètres correspondant à une recommandation. Le paramètre *BroadcastFlag* est optionnel et permet d'autoriser la lecture d'un message de recommandation par une entité intermédiaire sans que cette entité soit nécessairement destinataire du message.

Sur réception d'un message de recommandation, l'entité de contrôle 400 vérifie le type du message de recommandation reçu. Plus précisément l'entité de contrôle 400 vérifie si le message de recommandation est un message sous la forme de paquets de données transportant des données de recommandations relatives à l'application ou sous la forme de paquets de données transportant des données de recommandations relatives au chemin réseau. Pour cela l'entité de contrôle 400 vérifie respectivement qu'un bit « adec » ou « pdec » valorisé à 1 est contenu dans l'entête du message reçu (cf. titre 4, document de l'IETF « draft-hildebrand-spud-prototype-03 »).

Lorsque le message reçu est formé de paquets de données transportant des données de recommandations relatives à l'application (bit « apec » valorisé à 1), l'entité de contrôle 400 met en œuvre les étapes E3 à E5.

Lors de l'étape E3, le message de recommandation est dupliqué. L'entité de contrôle 400 dispose ainsi d'une version dupliquée du message de recommandation qu'elle peut modifier sans altérer le message de recommandation reçu.

Lors de l'étape E4a, l'entité de contrôle 400 relaie le message de recommandation reçu vers son destinataire, par l'intermédiaire de l'adresse de ce dernier contenue dans un entête du message. Les messages de recommandation émis par un point de terminaison sont ainsi systématiquement relayés vers leur destinataire.

Lors de l'étape E4b, l'entité de contrôle 400 met en œuvre une étape d'enrichissement du message reçu. Cet enrichissement consiste en un ajout d'informations obtenues par l'entité de contrôle 400 dans le message de recommandation dupliqué. Ces informations sont par exemple relatives à un point de terminaison (e.g. type de terminal utilisé) ou encore à un utilisateur d'un point de terminaison abonné à au moins un service de l'opérateur du réseau de communication 1 (e.g. profil utilisateur). Les informations permettant l'enrichissement sont par exemple obtenues par interrogation d'une base de données de profils d'abonnés.

Lors de l'étape E5, les recommandations dupliquées puis enrichies lors de l'étape E4b sont mémorisées dans une table T.

Lorsqu'à l'étape E2 le message de recommandation reçu est formé de paquets de données transportant des données de recommandations relatives au chemin réseau (bit « pdec » valorisé à 1), l'entité de contrôle 400 met en œuvre une étape E6 de vérification que le message de recommandation reçu a été émis par une entité de confiance, c'est-à-dire une entité agréée par l'opérateur du réseau de communications 1. Pour cela l'entité de contrôle 400 vérifie d'abord la présence d'un paramètre « Token » dans le message de recommandation reçu. Lorsque ce paramètre est présent, l'entité de contrôle 400 en vérifie ensuite la validité. Si le paramètre est valide, l'entité de contrôle 400 fait alors une tentative de déchiffrement de la recommandation à l'aide d'une clé de déchiffrement à laquelle renvoie le paramètre Token. Ce paramètre étant uniquement inséré dans un message de recommandation par les entités réseau agréées par l'opérateur du réseau de communication 1, il permet d'identifier que le message a été émis par une entité de confiance.

Lors de l'étape E7, si le message de recommandation est vérifié avoir été émis par une entité de confiance, l'entité de contrôle 400 l'intercepte. Le message de recommandation sera alors remplacé par un nouveau message de recommandation dont le calcul sera détaillé par la suite.

L'entité de contrôle 400 met alors de nouveau en œuvre l'étape E5, et le message de recommandation est mémorisé dans la table T.

Lorsqu'à l'étape E7, le message de recommandation n'est pas vérifié avoir été émis par une entité de confiance, un ensemble de contrôles faisant l'objet des étapes E8 à E14 est réalisé sur le message de recommandation.

Lors de l'étape E8, l'entité de contrôle 400 vérifie que le message de recommandation n'est pas un message malicieux. Il s'agit en particulier de vérifier que le message de recommandation ne provient pas d'une source considérée malicieuse (e.g. serveur appartenant à une liste de serveurs ayant été identifiés malicieux par l'opérateur du réseau de communication 1).

Lors de l'étape E9, après que le message de recommandation ait été vérifié être malicieux, l'entité de contrôle 400 le supprime et se remet en attente d'un prochain message de recommandation (étape El).

Dans le cas où le message de recommandation n'est pas malicieux, l'entité de contrôle 400 vérifie, lors de l'étape E10, que le message de recommandation est vérifiable. Un tel message de recommandation est dit vérifiable lorsqu'au moins une information du message peut être vérifiée par une mesure simple permettant de confirmer cette information.

Lorsque le message de recommandation n'est pas vérifiable, l'entité de contrôle 400 le relaie, lors de l'étape E11, vers son ou ses destinataires, puis se remet en attente d'un prochain message de recommandation (étape E1).

Lorsque le message de recommandation est vérifiable, l'entité de contrôle 400 analyse à l'étape E12 la mesure réalisée afin de confirmer la au moins une information transportée par le message. Si cette au moins une information n'est pas confirmée, l'entité de contrôle 400 supprime le message de recommandation (étape E13), puis se remet en attente d'un prochain message de recommandation (étape E1).

Lorsqu'en revanche la au moins une information transportée par le message de recommandation est confirmée lors de l'étape E12, l'entité de contrôle 400 relaie à l'étape E14 le message de recommandation vers son destinataire, et en mémorise une copie lors de l'étape E5 dans la table T, tel que décrit précédemment.

A l'issue de la phase P1, la table T a à titre illustratif le contenu suivant :

| ***Row Nb*** | ***SessionId*** | ***SrcId*** | ***DestId*** | ***Token*** | ***Broadcast Flag*** | ***Reco*** |
|---|---|---|---|---|---|---|
| 1 | **S1** | @IP100a | @IP200a | 0 | 0 | (type:WebRTC, res:4K, Device-type:tablet, resolution=480p) |
| 2 | **S2** | @IP100a | @IP200b | 0 | 0 | (type:videostream, res:4K, Device-type:tablet, resolution=480p) |
| 3 | **S3** | @IP100b | @IP200c | 0 | 0 | (type:videostream, res:1080p, Device-type:TV, resolution=1080p) |
| 4 | **S1** | @IP300a | - | t | 0 | (Eq-type :routeur, congestion=true, maxBDW=500Mb/s, availableMarking=BE, availableBDW=3Mb/s) |
| 5 | **S2** | @IP300a | - | t | 0 | (Eq- yp :routeur, congestion=true, maxBDW=500Mb/s, availableMarking=BE, availableBDW=3Mb/s) |
| 6 | **S3** | @IP300a | - | t | 0 | (Eq-type :routeur, |
| | | | | | | congestion=true, maxBDW=500Mb/s, availableMarking=(BE,AF42) availableBDW=BE=3Mb/s, AF42=30Mb/s) |
| 7 | **S1** | @IP300c | - | | 0 | (Eq-type :firewall, bindingTTL=20s, maxBDW=100Gb/s) |
| 8 | **S2** | (@IP300c | - | t | 0 | (Eq-type :firewall, bindingTTL=20s, maxBDW=100Gb/s) |
| 9 | **S3** | @IP300c | - | t | 0 | (Eq-type : firewall, bindingTTL=20s, maxBDW=100Gb/s) |

La table T mémorise les recommandations relatives aux sessions S1, S2 et S3 décrites précédemment en relation avec la figure 1. Les trois premières lignes de la table T ont été renseignées à partir de messages sous la forme de paquets de données transportant des données d'application, tandis que les autres lignes de la table T proviennent de messages sous la forme de paquets de données transportant des données de recommandations relatives à un chemin réseau.

La table T indique en particulier que le point de terminaison 100a d'adresse @IP100a a émis un message de recommandation à destination du point de terminaison 200a d'adresse @IP200a. La recommandation indique en outre que le type de session de service S1 concerné est une session WebRTC, et que la définition d'écran du point de terminaison est une définition dite 4K. De même, la table T indique que le point de terminaison 100a a émis un message de recommandation à destination du point de terminaison 200b d'adresse @IP200b. Cette dernière recommandation indique que la session de service S2 à laquelle est associée la recommandation est une session de lecture vidéo en continu, et reprend également la définition d'écran du point de terminaison 100a. La troisième ligne de la table T indique que le point de terminaison 100b a émis un message de recommandation à destination du point de terminaison 200c d'adresse @IP200c, et que la recommandation est relative à une session de service S3 de lecture vidéo en continu. Cette dernière recommandation indique en outre que la définition d'écran du point de terminaison 100b est une définition dite 1080p.

Les lignes 4 à 6 de la table T mémorisent les recommandations émises par l'entité réseau 300a d'adresse @IP300a pour respectivement les sessions S1, S2 et S3. Les recommandations pour les sessions S1, S2 et S3 indiquent le type d'équipement émetteur de la recommandation (« Eq-type:routeur »), que le chemin réseau associé est saturé (« congestion=true »), la bande passante maximale admise pour ce chemin réseau (« maxBDW=500Mb/s »), le type de politique suivie (« availableMarking=BE », avec BE pour « Best Effort »), et la bande passante disponible (« availableBDW=3Mb/s »). La recommandation pour la session S3 précise également qu'une deuxième politique est suivie pour cette session (« availableMarking=(BE,AF42) »). Le terme « AF42 » indique en effet la possibilité d'utiliser des files prioritaires pour la transmission des paquets de données transmis au cours de la session S3. Ces files prioritaires admettent une bande passante maximale de 30Mb/s (« availableBDW=AF42=30Mb/s »). Les lignes 4 à 6 de la table T ne précisent par ailleurs pas d'adresse de destination des messages de recommandation, car ces derniers sont émis par l'entité réseau 300a sur les tubes 10, 20 et 30 et relayés jusqu'aux points de terminaison par l'ensemble des entités réseaux constituant les chemins réseaux associés aux tubes 10, 20 et 30. De tels messages de recommandation sont dits de type « Advisory Path Data packets » et ne nécessitent pas que soit précisée une adresse de destination.

Enfin les lignes 7 à 9 de la table T mémorisent des recommandations émises par l'entité réseau 300c d'adresse @IP300c pour respectivement les sessions S1, S2 et S3. Ces recommandations sont identiques. Elles indiquent le type d'équipement émetteur de la recommandation (« Eq-type:firewall »), une durée de vie d'une session inactive (« bindingTTL=20s ») et la bande passante disponible (« availableBDW=100Gb/s »). Les messages de recommandation concernés sont de type « Advisory Path Data packets » et ne précisent pas d'adresse de destination.

La phase P2 de calcul de nouvelles recommandations va maintenant être décrite. Cette phase comprend plus particulièrement les étapes E15 et E16.

Les messages de recommandation sont mémorisés par l'entité de contrôle 400 jusqu'à ce que lors de l'étape E15 soit vérifiée une condition d'envoi de recommandations construites à partir des messages de recommandation précédemment reçus et enrichis. L'envoi de nouvelles recommandations générées par l'entité de contrôle 400 est par exemple réalisés lorsque l'entité de contrôle 400 reçoit un paquet de données d'un point de terminaison destinataire d'un message de recommandation qui a été dupliqué, indiquant ainsi que le message de recommandation a parcouru l'ensemble du chemin réseau entre l'entité de contrôle 400 et le point de terminaison destinataire du message.

Lorsque la condition d'envoi des nouveaux messages de recommandation n'est pas vérifiée, l'entité de contrôle 400 se remet en attente d'un prochain message de recommandation (étape E1), et réitère les étapes de la phase P1.

Une fois la d'envoi des nouveaux messages de recommandation vérifiée, l'entité de contrôle 400 met en œuvre une étape E16 de calcul de nouveaux messages de recommandation. Au cours de cette étape l'entité de contrôle 400 calcule de nouvelles recommandations à partir des recommandations obtenues et d'au moins une information relative à des conditions du réseau fournie par l'entité de contrôle 400. Le calcul de nouvelles recommandations est réalisé en fonction d'une politique de contrôle définie par l'opérateur et paramétrée par exemple localement au niveau de l'entité de contrôle 400. Différentes politiques de contrôles peuvent être mises en œuvre en fonction notamment du type de session (e.g. WebRTC pour « Web Real-Time Communication », service TV) entre points de terminaison et/ou de l'existence d'accords relatifs à l'acheminement de données entre l'opérateur et le fournisseur du service concerné.

A titre d'exemple, dans le cas d'une politique de l'opérateur visant à fournir le meilleur service WebRTC, un nouveau message de recommandation calculé par l'entité de contrôle 400 peut avoir la forme suivante :
(S1, @IP400, @IP200a, t, 0,
(Eq-type:tablet, res:480p, maxBDW=500Kb/s, Use TURNserver @TURNServer, DSCP :AF42, TTL :20s))

Le paramètre « Eq-type:tablet » indique que le point de terminaison source concerné par la recommandation est une tablette. Cette information est obtenue depuis les recommandations enrichies et mémorisées lors des étapes E4b et E5. L'entité de contrôle 400 obtient par exemple cette information en consultant la liste des équipements qui lui sont connectés par l'intermédiaire du protocole UPnP pour « Universal Plug and Play ». Le paramètre « res:480p » indique une définition recommandée par l'opérateur. La définition recommandée est déduite en fonction du type du point de terminaison source, une tablette dans le présent mode de réalisation. La bande passante maximale (paramètre « maxBDW=500Kb/s ») est déduite des bandes passantes indiquées dans l'ensemble des recommandations mémorisées dans la table T pour un même chemin réseau et d'un maximum de bande passante autorisé pour une session WebRTC fixé par l'opérateur à 500Kb/s. Dans le mode de réalisation décrit, le chemin réseau associé à la session S1 passe par les routeurs 300a et 300b, ainsi que par le pare-feu 300c. L'ensemble des recommandations contenues dans la table T et émises par une entité de confiance (agréée par l'opérateur du réseau de communications 1) est pris en compte pour le calcul de la nouvelle recommandation. Le routeur 300b n'étant pas vérifié de confiance, les recommandations qu'il émet ne sont pas prises en compte. Les recommandations prises en compte sont donc plus particulièrement celles des lignes 4 à 9 de la table T. La valeur finale de la bande passante retenue pour la nouvelle recommandation correspondant au minimum entre la valeur maximale définie pour une session WebRTC (500 Kb/s) et le minimum des bandes passantes indiquées dans les recommandations émises par les entités de confiance pour le chemin réseau considéré, soient les recommandations des lignes 4 à 9 de la table T. La dernière partie de la recommandation indique en outre la possibilité d'utiliser des files d'accès prioritaires («Use TURNserver @TURNServer, DSCP :AF42 »). Enfin la durée de vie de la session contenue dans le nouveau message de recommandation correspond au minimum des durées de vie des des sessions contenues dans les recommandations associées au chemin réseau considéré.

Dans le cas d'une politique de type dit « best effort » sans collaboration entre l'opérateur et les entités fournisseurs de contenus 200a-c, un nouveau message de recommandation a par exemple la forme suivante :
(S2, @IP400, @IP200b, t, 0, (Eq-type:tablet, res:480p, maxBDW=2,5Mb/s, TTL:20s))

De même que pour la politique de contrôle décrite précédemment, le paramètre « Eq-type:tablet » indique que le point de terminaison source concerné par la recommandation est une tablette. Le paramètre « res:480p » indique une définition recommandée par l'opérateur. La bande passante maximale (paramètre « maxBDW=2,5Mb/s ») est déduite des bandes passantes indiquées dans l'ensemble des recommandations mémorisées dans la table T pour un même chemin réseau et d'un maximum de bande passante autorisé pour un service et un type de point de terminaison source. Dans le mode de réalisation décrit, le chemin réseau associé à la session S1 passe par les routeurs 300a et 300b, ainsi que par le pare-feu 300c. L'ensemble des recommandations contenues dans la table T et émises par une entité de confiance (agréée par l'opérateur du réseau de télécommunications 1) est pris en compte pour le calcul de la nouvelle recommandation. Le routeur 300b n'étant pas vérifié de confiance, les recommandations qu'il émet ne sont pas prises en compte. Les recommandations prises en compte sont donc plus particulièrement celles des lignes 4 à 9 de la table T.

La bande passante recommandée est en outre calculée à partir des recommandations relatives à des sessions de lecture vidéo en continu, soient les recommandations relatives aux sessions S2 et S3. Le minimum des bandes passantes disponibles (paramètre « availableBDW ») est d'abord obtenu par l'entité de contrôle 400, puis cette dernière y soustrait ensuite la bande passante recommandée pour un service WebRTC qui, tel que décrit précédemment, est de 500Kb/s. La bande passante recommandée obtenue pour un service de lecture vidéo en continue est ainsi de 2,5Mb/s. La durée de vie du nouveau message de recommandation correspond, comme précédemment décrit, au minimum des durées de vie des recommandations associées au chemin réseau considéré.

Enfin, dans le cas d'une politique de contrôle axée sur des services de télévision avec une collaboration entre l'opérateur du réseau de communications 1 et les fournisseurs de contenus 200a-c, un nouveau message de recommandation a par exemple la forme suivante :
(S3, @IP400, @IP200a, t, 0,
(Eq-type:TV, res:1080p, maxBDW=12Mb/s, Use TURNserver @TURNServer, DSCP :AF42, TTL :20s))

Les paramètres « Eq-type :TV », « res :1080p » et « TTL :20s » sont calculés tel que décrit précédemment pour les deux précédentes politiques de contrôle. La bande passante recommandée correspond à une valeur maximale de bande passante recommandée par l'opérateur du réseau de communications 1 pour un équipement de type « TV », qui soit compatible avec les valeurs de bandes passantes indiquées dans les recommandations mémorisées dans la table T, en ayant recours le cas échéant à des files prioritaires (ce qu'indique le paramètre « AF42 »).

Les recommandations calculées par l'entité de contrôle 400 permettent ainsi d'améliorer la pertinence des recommandations reçues par les points de terminaisons. En l'absence de l'entité de contrôle 400, la non prise en compte des informations relatives au réseau d'opérateur, et aux autres sessions en cours serait susceptible d'engendrer des recommandations erronées pouvant provoquer une aggravation de l'état du réseau lorsque celui-ci est par exemple saturé. Plus particulièrement, sans la collaboration permise par l'entité de contrôle 400 entre l'opérateur du réseau de communications 1 et les entités fournisseur de services 200a-c, les recommandations émises pour les sessions S1, S2 et S3 ne tiendraient compte que de caractéristiques logicielles associées aux différents services concernés. Pour les modes de réalisation décrits, cela reviendrait par exemple à ne considérer pour chaque session que la définition demandée par les points de terminaison source. On aurait ainsi pour les sessions S1 et S2 une bande passante recommandée de 70Mb/s (bande passante pour une définition 4K) et pour la session S3 une bande passante recommandée de 2,5Mb/s, tandis que la bande passante disponible ne serait que de 3Mb/s, soit 1Mb/s de bande passante disponible par session.

Les nouvelles recommandations calculées lors de l'étape E16 sont envoyées après calcul aux points de terminaison, ce qui met fin à la phase P2 du procédé de contrôle.

L'entité de contrôle 400 se remet ensuite en attente d'un prochain message de recommandation (étape E1), et réitère à réception du prochain message de recommandation les étapes de la phase P1 du procédé.

Dans un autre mode de réalisation le paramètre « Token » utilisé pour vérifier qu'un message de recommandation a été émis depuis une entité de confiance (étape E6), est également utilisé pour demander à l'entité de contrôle 400 d'intercepter de tels messages. Il est ainsi possible de ne pas encombrer le réseau par l'envoi de ces recommandations en dehors du domaine de confiance constitué des entités réseaux agréées par l'opérateur du réseau de communications 1.

Dans encore un autre mode de réalisation, le paramètre « Token » est également utilisé pour indiquer un type et/ou une clé de chiffrement. Il permet alors à des entités de confiance de chiffrer/déchiffrer les messages de recommandation. Ce mode de fonctionnement est particulièrement avantageux lorsqu'un opérateur de réseaux souhaite maintenir la confidentialité des messages de recommandations émis par ses entités réseau, ou lorsque dans le cadre par exemple d'un accord entre l'opérateur et un fournisseur de service, cette même confidentialité est exigée de la part du fournisseur de service.

Les étapes E4a et E4b ont été décrites avec une mise en œuvre en parallèle. Dans un autre mode de réalisation ces étapes sont réalisées séquentiellement.

Dans encore un autre mode de réalisation l'étape E4b est optionnelle.

Dans le mode de réalisation décrit, les messages de recommandation de type « Advisory Path Data packets » ne précisent pas d'adresse de destination. Dans un autre mode de réalisation, l'adresse du point de terminaison destinataire peut être renseignée afin notamment de conserver des entêtes de messages de recommandation de taille fixe.

A l'étape E5, les recommandations sont mémorisées dans une table T. Il n'existe cependant aucune limitation quant au type de structure de données utilisée. A titre d'exemple, les recommandations peuvent être mémorisées dans une matrice, ou encore il peut s'agir d'une simple liste. En outre avant mémorisation d'une recommandation, une étape optionnelle de filtrage des recommandations mémorisées peut être mise en œuvre afin de réduire la quantité d'informations stockées. Ce filtrage consiste par exemple à empêcher l'enregistrement d'une information déjà enregistrée précédemment dans la table, ou encore à appliquer une politique définie par l'opérateur visant à écarter certaines recommandations.

Dans un autre mode de réalisation, à l'étape E15 l'envoi de nouveaux messages de recommandation générés par l'entité de contrôle 400 est déclenchés par l'expiration d'une temporisation. Dans encore un autre mode de réalisation, l'envoi est déclenché à chaque fois que l'entité de contrôle 400 reçoit un message de recommandation.

Dans un autre mode de réalisation, l'entité de contrôle 400 met en œuvre une étape d'agrégation des recommandations mémorisées à l'étape E5 à la fin de la phase P1. Cette étape d'agrégation permet notamment de réduire le nombre d'informations gardées en mémoire par l'entité de contrôle 400, et d'optimiser le calcul de nouvelles recommandations qui prend alors en compte un ensemble réduit de recommandations.

La **figure 3** représente une entité de contrôle 400, dans un réseau de communications, de messages de recommandation échangés via un tube regroupant des paquets de données d'un protocole de communication sans garantie de livraison des paquets de données, entre un premier point de terminaison, dit entité source, et un deuxième point de terminaison, dit entité réceptrice. L'entité de contrôle 400 est localisée sur un chemin réseau du tube et agréée par un opérateur du réseau. L'entité de contrôle 400 comprend :
- un premier module d'obtention 410, agencé pour obtenir des recommandations contenues dans les messages de recommandation ;
- un deuxième module d'obtention 420, agencé pour obtenir au moins une information relative à des conditions du réseau ;
- un module de calcul 430, agencé pour calculer un nouveau message de recommandation, à partir des recommandations obtenues par le premier module d'obtention, et d'au moins une information relative à des conditions du réseau obtenue par le deuxième module d'obtention ; et
- un module d'envoi 440, agencé pour envoyer le nouveau message de recommandation à destination d'au moins une entité réseau localisée sur un chemin réseau du tube.

Dans un mode de réalisation particulier, l'entité de contrôle 400 comprend en outre un module d'interception 450, agencé pour intercepter au moins un message de recommandation parmi les messages de recommandation échangés, le module de calcul étant agencé pour remplacer le au moins un message de recommandation intercepté par le nouveau message de recommandation.

Dans un autre mode de réalisation particulier, l'entité de contrôle 400 comprend en outre un module d'agrégation 460, agencé pour agréger les recommandations obtenues par le premier module d'obtention, le module de calcul étant agencé pour calculer le nouveau message de recommandation en prenant en compte les recommandations agrégées par le module d'agrégation.

Dans un autre mode de réalisation particulier, l'entité de contrôle 400 comprend en outre un module de chiffrement 470, agencé pour chiffrer le nouveau message de recommandation préalablement à son envoi par le module d'envoi.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 410, 420, 430, 440, 450, 460 et 470 sont agencés pour mettre en œuvre le procédé de contrôle précédemment décrit. Il s'agit de préférence de modules logiciels comprenant des instructions logicielles pour faire exécuter celles des étapes du procédé de contrôle précédemment décrit, mises en œuvre par une entité de contrôle. L'invention concerne donc aussi :
- un programme pour une entité de contrôle, comprenant des instructions de code de programme destinées à commander l'exécution des étapes du procédé de contrôle précédemment décrit, lorsque ledit programme est exécuté par ladite entité de contrôle ;
- un support d'enregistrement lisible par une entité de contrôle sur laquelle est enregistré le programme pour une entité de contrôle.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de contrôle, dans un réseau de communications (1), de messages de recommandation échangés lors d'une session entre un premier point de terminaison (100a-b), dit entité source, et un deuxième point de terminaison (200a-c), dit entité réceptrice, lesdits messages étant échangés via un tube (10, 20, 30), regroupant des paquets de données entre deux points de terminaison du réseau, lesdits paquets de données étant d'un protocole de communication sans garantie de livraison desdits paquets de données, comprenant :
- obtention (P1) de recommandations contenues dans lesdits messages de recommandation par une entité de contrôle (400) localisée sur un chemin réseau dudit tube, ladite entité de contrôle étant agréée par un opérateur dudit réseau de communications ;
- calcul (E16) d'un nouveau message de recommandation, à partir desdites recommandations obtenues et d'au moins une information relative à des conditions dudit réseau fournie par ladite entité de contrôle ; et
- envoi dudit nouveau message de recommandation à destination d'au moins une entité réseau localisée à une extrémité dudit tube.

2. Procédé selon la revendication 1, comprenant en outre une interception d'au moins un message de recommandation parmi lesdits messages de recommandation échangés, ledit nouveau message de recommandation calculé remplaçant ledit au moins un message de recommandation intercepté.

3. Procédé selon la revendication 1, comprenant en outre une agrégation desdites recommandations obtenues, ledit calcul du nouveau message de recommandation prenant en compte lesdites recommandations agrégées.

4. Entité de contrôle (400), dans un réseau de communications, de messages de recommandation échangés via un tube), regroupant des paquets de données entre deux points de terminaison du réseau, lesdits paquets de données étant d'un protocole de communication sans garantie de livraison desdits paquets de données, entre un premier point de terminaison, dit entité source, et un deuxième point de terminaison, dit entité réceptrice, ladite entité de contrôle étant localisée sur un chemin réseau dudit tube et agréée par un opérateur dudit réseau, comprenant :
- un premier module d'obtention (410), agencé pour obtenir des recommandations contenues dans lesdits messages de recommandation ;
- un deuxième module d'obtention (420), agencé pour obtenir au moins une information relative à des conditions dudit réseau ;
- un module de calcul (430), agencé pour calculer un nouveau message de recommandation, à partir desdites recommandations obtenues par ledit premier module d'obtention, et d'au moins une information relative à des conditions dudit réseau obtenue par ledit deuxième module d'obtention ; et
- un module d'envoi (440), agencé pour envoyer ledit nouveau message de recommandation à destination d'au moins une entité réseau localisée sur un chemin réseau dudit tube.

5. Entité de contrôle selon la revendication 4, comprenant en outre un module d'interception (450), agencé pour intercepter au moins un message de recommandation parmi lesdits messages de recommandation échangés, ledit module de calcul étant agencé pour remplacer ledit au moins un message de recommandation intercepté par ledit nouveau message de recommandation.

6. Entité de contrôle selon la revendication 4, comprenant en outre un module d'agrégation (460), agencé pour agréger lesdites recommandations obtenues par ledit premier module d'obtention, ledit module de calcul étant agencé pour calculer ledit nouveau message de recommandation en prenant en compte lesdites recommandations agrégées par ledit module d'agrégation.

7. Entité de contrôle selon la revendication 4, comprenant en outre un module de chiffrement (470), agencé pour chiffrer ledit nouveau message de recommandation préalablement à son envoi par ledit module d'envoi.

8. Système de contrôle, dans un réseau de communications (1), de messages de recommandation échangés via un tube (10, 20, 30)), regroupant des paquets de données entre deux points de terminaison du réseau, lesdits paquets de données étant d'un protocole de communication sans garantie de livraison desdits paquets de données, entre un premier point de terminaison (100a-b), dit entité source, et un deuxième point de terminaison (200a-c), dit entité réceptrice, comprenant :
- lesdites entités source et réceptrice ;
- au moins une entité de contrôle (400) de messages de recommandation selon l'une des revendications 4 à 7.

9. Système de contrôle selon la revendication 8, dans lequel ladite entité source est un terminal utilisateur, l'entité réceptrice un serveur, et dans lequel l'entité de contrôle est en outre gérée par un opérateur dudit réseau de communications.

10. Programme pour une entité de contrôle de messages de recommandation, comprenant des instructions de code de programme destinées à commander l'exécution des étapes du procédé de contrôle selon l'une des revendications 1 à 3, lorsque ledit programme est exécuté par une entité de contrôle de messages de recommandation.

11. Support d'enregistrement lisible par une entité de contrôle de messages de recommandation sur laquelle est enregistré le programme selon la revendication 10.

## Patentansprüche

1. Verfahren zur Steuerung, in einem Kommunikationsnetzwerk (1), von Empfehlungsnachrichten, die während einer Sitzung zwischen einem ersten Endpunkt (100a-b), Quellenentität genannt, und einem zweiten Endpunkt (200a-c), Empfangsentität genannt, ausgetauscht werden, wobei die Nachrichten über eine Röhre (10, 20, 30) ausgetauscht werden, die Datenpakete zwischen zwei Endpunkten des Netzwerks zusammenfasst; wobei die Datenpakete von einem Kommunikationsprotokoll ohne Liefergarantie der Datenpakete sind, das enthält:
- Erhalt (P1) von in den Empfehlungsnachrichten enthaltenen Empfehlungen durch eine Steuerentität (400), die sich auf einem Netzwerkpfad der Röhre befindet, wobei die Steuerentität von einem Betreiber des Kommunikationsnetzwerks zugelassen wird;
- Berechnung (E16) einer neuen Empfehlungsnachricht, ausgehend von den erhaltenen Empfehlungen und von mindestens einer Information bezüglich von Bedingungen des Netzwerks, die von der Steuerentität geliefert wird; und
- Senden der neuen Empfehlungsnachricht an mindestens eine Netzwerkentität, die sich an einem Ende der Röhre befindet.

2. Verfahren nach Anspruch 1, das außerdem ein Abfangen mindestens einer Empfehlungsnachricht unter den ausgetauschten Empfehlungsnachrichten enthält, wobei die berechnete neue Empfehlungsnachricht die mindestens eine abgefangene Empfehlungsnachricht ersetzt.

3. Verfahren nach Anspruch 1, das außerdem eine Aggregation der erhaltenen Empfehlungen enthält, wobei die Berechnung der neuen Empfehlungsnachricht die aggregierten Empfehlungen berücksichtigt.

4. Steuerentität (400), in einem Kommunikationsnetzwerk, von über eine Röhre, die Datenpakete zwischen zwei Endpunkten des Netzwerks zusammenfasst, wobei die Datenpakete von einem Kommunikationsprotokoll ohne Liefergarantie der Datenpakete sind, zwischen einem ersten Endpunkt, Quellenentität genannt, und einem zweiten Endpunkt, Empfangsentität genannt, ausgetauschten Empfehlungsnachrichten, wobei die Steuerentität sich auf einem Netzwerkpfad der Röhre befindet und von einem Betreiber des Netzwerks zugelassen wird, die enthält:
- ein erstes Erhaltungsmodul (410), das eingerichtet ist, um in den Empfehlungsnachrichten enthaltene Empfehlungen zu erhalten;
- ein zweites Erhaltungsmodul (420), das eingerichtet ist, um mindestens eine Information bezüglich von Bedingungen des Netzwerks zu erhalten;
- ein Rechenmodul (430), das eingerichtet ist, um eine neue Empfehlungsnachricht ausgehend von den vom ersten Erhaltungsmodul erhaltenen Empfehlungen und von mindestens einer Information bezüglich von Bedingungen des Netzwerks zu berechnen, die vom zweiten Erhaltungsmodul erhalten wird; und
- ein Sendemodul (440), das eingerichtet ist, um die neue Empfehlungsnachricht an mindestens eine Netzwerkentität zu schicken, die sich auf einem Netzwerkpfad der Röhre befindet.

5. Steuerentität nach Anspruch 4, die außerdem ein Abfangmodul (450) enthält, das eingerichtet ist, um mindestens eine Empfehlungsnachricht unter den ausgetauschten Empfehlungsnachrichten abzufangen, wobei das Rechenmodul eingerichtet ist, um die mindestens eine abgefangene Empfehlungsnachricht durch die neue Empfehlungsnachricht zu ersetzen.

6. Steuerentität nach Anspruch 4, die außerdem ein Aggregationsmodul (460) enthält, das eingerichtet ist, um die vom ersten Erhaltungsmodul erhaltenen Empfehlungen zu aggregieren, wobei das Rechenmodul eingerichtet ist, um die neue Empfehlungsnachricht unter Berücksichtigung der vom Aggregationsmodul aggregierten Empfehlungen zu berechnen.

7. Steuerentität nach Anspruch 4, die außerdem ein Verschlüsselungsmodul (470) enthält, das eingerichtet ist, um die Empfehlungsnachricht vor ihrem Senden durch das Sendemodul zu verschlüsseln.

8. Steuersystem, in einem Kommunikationsnetzwerk (1), von über eine Röhre (10, 20, 30), die Datenpakete zwischen zwei Endpunkten des Netzwerks zusammenfasst, wobei die Datenpakete von einem Kommunikationsprotokoll ohne Liefergarantie der Datenpakete sind, zwischen einem ersten Endpunkt (100a-b), Quellenentität genannt, und einem zweiten Endpunkt (200a-c), Empfangsentität genannt, ausgetauschten Empfehlungsnachrichten, das enthält:
- die Quellen- und Empfangsentitäten;
- mindestens eine Steuerentität (400) von Empfehlungsnachrichten nach einem der Ansprüche 4 bis 7.

9. Steuersystem nach Anspruch 8, wobei die Quellenentität ein Benutzer-Endgerät, die Empfangsentität ein Server ist, und wobei die Steuerentität außerdem von einem Betreiber des Kommunikationsnetzwerks verwaltet wird.

10. Programm für eine Steuerentität von Empfehlungsnachrichten, das Programmcodeanweisungen enthält, die dazu bestimmt sind, die Ausführung der Schritte des Steuerverfahrens nach einem der Ansprüche 1 bis 3 zu befehlen, wenn das Programm von einer Steuerentität von Empfehlungsnachrichten ausgeführt wird.

11. Speicherträger, der von einer Steuerentität von Empfehlungsnachrichten lesbar ist, auf dem das Programm nach Anspruch 10 gespeichert ist.

## Claims

1. Method for controlling, in a communications network (1), recommendation messages exchanged during a session between a first endpoint (100a-b), called the source entity, and a second endpoint (200a-c), called the recipient entity, said messages being exchanged via a tube (10, 20, 30) grouping data packets of a communications protocol with no guarantee of the delivery of said data packets, which method comprises:
- obtaining (P1) recommendations contained in said recommendation messages by a control entity (400) located on a network path of said tube, said control entity being authorized by an operator of said communications network;
- calculating (E16) a new recommendation message on the basis of said recommendations obtained and of at least one information item relating to conditions of said network provided by said control entity; and
- sending said new recommendation message to at least one network entity located at one end of said tube.

2. Method according to Claim 1, further comprising intercepting at least one recommendation message among said exchanged recommendation messages, said new calculated recommendation message replacing said at least one intercepted recommendation message.

3. Method according to Claim 1, further comprising aggregating said recommendations obtained, said calculation of the new recommendation message taking into account said aggregated recommendations.

4. Control entity (400) for controlling, in a communications network, recommendation messages exchanged via a tube grouping data packets between two endpoints of the network, said data packets being of a communications protocol, with no guarantee of the delivery of said data packets, between a first endpoint, called the source entity, and a second endpoint, called the recipient entity, said control entity being located on a network path of said tube and authorized by an operator of said network, which entity comprises:
- a first obtaining module (410), arranged to obtain recommendations contained in said recommendation messages;
- a second obtaining module (420), arranged to obtain at least one information item relating to conditions of said network;
- a calculation module (430), arranged to calculate a new recommendation message on the basis of said recommendations obtained by said first obtaining module, and of at least one information item relating to conditions of said network obtained by said second obtaining module; and
- a sending module (440), arranged to send said new recommendation message to at least one network entity located on a network path of said tube.

5. Control entity according to Claim 4, further comprising an interception module (450), arranged to intercept at least one recommendation message among said exchanged recommendation messages, said calculation module being arranged to replace said at least one intercepted recommendation message with said new recommendation message.

6. Control entity according to Claim 4, further comprising an aggregation module (460), arranged to aggregate said recommendations obtained by said first obtaining module, said calculation module being arranged to calculate said new recommendation message by taking into account said recommendations aggregated by said aggregation module.

7. Control entity according to Claim 4, further comprising an encryption module (470), arranged to encrypt said new recommendation message before it is sent by said sending module.

8. System for controlling, in a communications network (1), recommendation messages exchanged via a tube (10, 20, 30) grouping data packets between two endpoints of the network, said data packets being of a communications protocol, with no guarantee of the delivery of said data packets, between a first endpoint (100a-b), called the source entity, and a second endpoint (200a-c), called the recipient entity, which system comprises:
- said source and recipient entities;
- at least one control entity (400) for controlling recommendation messages according to any of Claims 4 to 7.

9. Control system according to Claim 8, wherein said source entity is a user terminal and the recipient entity is a server, and wherein the control entity is also managed by an operator of said communications network.

10. Program for a control entity for controlling recommendation messages, comprising program code instructions intended to command the execution of the steps of the control method according to any of Claims 1 to 3, when said program is executed by a control entity for controlling recommendation messages.

11. A recording medium, readable by a control entity for controlling recommendation messages, on which the program according to Claim 10 is recorded.
